# EUROPÄISCHE PATENTANMELDUNG

(11) **EP 2 263 504 A2**
(43) Veröffentlichungstag der Anmeldung: **22.12.2010**
(21) Anmeldenummer: 09010204.7
(22) Anmeldetag: 07.08.2009
(51) Int. Cl.: A47J 37/06

(54) **Brataufsatz mit Rillen zur Fettentsorgung**

(30) Priorität: 22.05.2009 DE 102009022411
(71) Anmelder: Janocha, Daniel, 97078 Würzburg (DE)
(72) Erfinder: Janocha, Daniel, 97078 Würzburg (DE)
(74) Vertreter: Pöhner, Wilfried Anton, Dr.

(57) **Zusammenfassung**

Brataufsatz zum Schnellbraten von mehreren Würsten oder ähnlich geformten Lebensmitteln, bestehend aus einer Bratfläche, die auf einem Grill oder einer anderen Wärmequelle aufliegt und in die mehrere Rinnen eingeformt sind, wobei die Rinnen im wesentlichen aus drei etwa ebenen Streifen, bestehen, die an ihren Längskanten zu einem etwa trapezförmigen Profil verbunden sind und wenigstens eine Wurst mit wenigstens zwei, zueinander beabstandeten, länglichen Bereichen ihrer Außenhaut je einen der drei Streifen einer Rinne berührt.

## Beschreibung

### Brataufsatz mit Rillen zur Fettentsorgung

Die Erfindung bezieht sich auf einen Brataufsatz, zum Schnellbraten von mehreren Würsten oder plattenförmigen Lebensmitteln, bestehend aus einer Bratfläche, die auf einem Grill oder einer anderen Wärmequelle aufliegt und in die mehrere Rinnen eingeformt sind.

Für das Zubereiten von Würsten oder anderen ähnlich geformten Lebensmitteln wie z. B. Fischen, Zucchini oder sogenannten "Spießen", also auf einem Stift aufgespießten Abschnitten von Fleisch und/oder Gemüse , aber auch für plattenförmige Lebensmittel, wie z.B. Steaks, ist eine seit langem und sehr weit bekannte Art der Zubereitung das Grillen. Dazu wird jedes Lebensmittel oberhalb und in geringen Abstand von einer Wärmequelle befestigt, die darauf Strahlungswärme abgibt und sie dadurch erhitzt.

Der Prozess des Grillens wird im Folgenden am Beispiel eines Würstchens erläutert, gilt jedoch im Prinzip auch für alle anderen Lebensmittel.

Es wird solange Wärmeenergie auf die Würste übertragen, bis sie auch in ihrem Kernbereich ausreichend durchgegart sind. Da die auf den Kernbereich wirkende Wärmemenge die äußeren Zonen des Querschnittes vom Würstchen durchlaufen hat, wirkt auf die äußeren Zonen und in verstärktem Maße auf die Außenhaut des Würstchens eine größere Wärmemenge ein als auf das Innere.

Dadurch verteilt sich die Wärme nicht ganz gleichmäßig, was in gewissen Grenzen als geschmacklich interessant und daher willkommen eingestuft wird. Als ideale Zubereitung wird eingestuft, wenn die Außenhaut des Würstchens eine "goldbraune" Farbe angenommen hat. Diese goldbraune Farbe entsteht durch eine dünne Fettschicht auf der Haut des Würstchens sowie durch Eindringen von Fett in den oberen Bereich der Haut des Würstchens, das dort erhärtet.

Ein Problem dabei ist, dass je nach Konsistenz des Würstchens oder auch eines anderen Lebensmittels Wasser und insbesondere ein Übermaß an Fett austreten kann. Das zur idealen Bräunung nicht benötigte Fett bildet im erhitzten Zustand eine Flüssigkeit. Wenn diese in eine als Wärmequelle dienende Flamme tropft, kann sie sich ebenfalls entflammen. Im Bereich der Flammen wird das Lebensmittel überhitzt und dadurch zu einem mehr oder minder großen Teil angebrannt. Diese verbrannten Teile sind nicht nur geschmacklich höchst unwillkommen. Durch die dabei auf das Lebensmittel aufgetragenen und zum Teil auch eingedrungenen, überhitzten Fette, die vom menschlichen Verdauungssystem nur schwer und wenn, dann mit zu vielen belastenden Stoffwechselprodukten abbaubar sind, sind sie auch gesundheitlich belastend.

Um eine ideale Bräunung beim Grillen zu erreichen, muss das Würstchen mechanisch in einem bestimmten Abstand zur Wärmequelle fixiert werden. Diese Aufgabe wird dadurch erschwert, dass sich die Wärmequelle in der Regel über eine Fläche erstreckt und deshalb das Würstchen aus nur einer einzigen Richtung mit Strahlungswärme beaufschlagt, denn Wärmequellen, die durch die Verbrennung von Holz, Holzkohle oder anderem, festem Brennmaterial betrieben werden, sind in der Regel horizontal ausgerichtet, um das Brennmaterial gleichmäßig auf einer Fläche verteilen zu können.

Auch Wärmequellen für flüssige oder gasförmige Brennstoffe wie Gasbrenner oder Ölbrenner sind ebenfalls in der Regel horizontal angeordnet, damit zusätzlich zur Strahlungswärme auch die von der Wärmequelle erwärmte Luft, die selbsttätig nach oben aufsteigt, zu einer zusätzlichen Erhitzung des Würstchens durch Konvektion nutzbar ist. Das Gleiche gilt für elektrisch betriebene Wärmequellen wie Heizplatten, Infrarotstäbe oder Infrarotstrahlern. Das Würstchen wird also nicht nur durch Strahlungswärme, sondern auch zusätzlich durch Kontakt mit der erwärmten Luft erhitzt.

Für jede Art dieser flächigen Wärmequellen ergibt sich also die zusätzliche Aufgabe, dass das Würstchen nur aus einer Richtung mit Strahlungswärme beaufschlagt wird, die sich nur auf einen einzigen Streifen von begrenzter Breite auf der Außenhaut des Würstchens in Längsachse verteilt und nur diesen Streifen optimal zubereitet. Der restliche Bereich ist in Farbe und Konsistenz noch nahe seinem ursprünglichen Zustand, die Zubereitung ist also noch nicht abgeschlossen. Deshalb muss das Würstchen laufend gewendet werden

Um ein vergleichsweise einfaches "Wenden" der Würstchen zu ermöglichen, bestehen auf aktuellem Stand der Technik die Einrichtungen zum Grillen oder Braten eines Würstchens aus einer horizontal angeordneten Ebene, die von zahlreichen Öffnungen unterbrochen ist und auf der die Würstchen weiter gerollt werden.

In einem sehr einfachen Fall ist die Zubereitungsfläche ein Gitter, auf dessen Oberseite die Würstchen abgelegt werden und auf dessen Unterseite die Wärmequelle einwirkt. Durch die Öffnungen des Gitters gelangt Strahlungswärme und erhitzte Luft zu den Würstchen. In der Regel bestehen die Stäbe dieses Gitters aus Metall, sodass das Gitter auch bei den erforderlichen hohen Temperaturen noch stabil ist.

Ein wesentlicher Nachteil dieser einfachen Grillgitter ist, dass sich die Metallstäbe durch die Strahlungswärme des Feuers so stark erhitzen, dass sie das darauf liegende Würstchen in diesem Bereich so stark erwärmen, dass das aus dem Würstchen austretende Fett schwarz gefärbt wird und einen schwarzen Streifen auf dem Würstchen hinterlässt. Im Extremfall sind auch die benachbarte Außenhaut des Würstchens oder sogar breitere Zonen des Würstchens geschwärzt. Diese geschwärzten Bereiche sind - wie erwähnt - optisch unschön und ernährungstechnisch höchst nachteilig, da regelmäßiger Verzehr von zu stark erhitztem Fett und zu stark erhitztem Fleisch nachweislich krebsauslösend wirken kann.

Um dieses Problem einzuschränken, beschreibt auf aktuellem Stand der Technik das Gebrauchsmuster DE 20 2004 007 745 einen Grill, dessen Grillstäbe hohl sind und von Luft durchströmt werden, wodurch sich ihre Außentemperatur verringert. Es verbleibt jedoch auch mit dieser Grilleinrichtung der Nachteil, dass die Würstchen nur aus einer einzigen Richtung vorrangig erhitzt werden.

Ein weiterer Nachteil auch dieses Grills ist, dass aus den Würstchen austretendes Fett in die darunter züngelnden Flammen tropfen kann und dort verbrannt wird. Die dadurch entstehenden Stichflammen führen zu einer unzulässigen Erhitzung von Bereichen der Außenhaut und erzeugen damit weitere, zu hoch erhitzte, geschwärzte und evtl. krebserzeugende Bereiche.

Um das Abtropfen von Fett auf die Wärmequelle zu vermeiden, beschreibt das Patent US 3,842,726 eine Grillfläche, in die zahlreiche, zueinander parallel verlaufende Nuten oder Rinnen eingebracht sind, sodass zwischen diesen Nuten schmale Stege entstehen, auf denen das Würstchen aufliegt. Beim Erhitzen davon abtropfendes Fett fällt in die Rinnen und kann darin abfließen ohne in die Wärmequelle zu gelangen.

Ein wesentlicher Nachteil dieser Einrichtung ist, dass das Würstchen in den Bereichen, in denen es auf den Stegen aufliegt, durch direkten Kontakt mit der heißen Platte sehr viel stärker erhitzt wird als in den anderen Bereichen, sodass auch diese Grilleinrichtung die Würstchen ungleichmäßig erhitzt. Bereits bei einer geringen Überschreitung der Garzeit und/oder der Gartemperatur ist die ungleichmäßige Erhitzung durch Querstreifen auf dem Würstchen sichtbar.

Dieses ernährungstechnisch risikobehaftete Grillergebnis wird jedoch von der genannten US-Patentanmeldung nicht als ein Nachteil eingestuft, sondern ist - ganz im Gegenteil - sogar erwünscht: Die Patentschrift stuft die Erhöhungen zwischen den Rinnen als Grate oder Stege ein und nennt in Spalte 2, Zeile 49 - 51 konkret, dass die Fläche dieser Stege kleiner ist als die Fläche der Rinnen, die Stege also schmäler sind als die Rinnen. Dem entsprechen "scharf gebratene Streifen" oder "angebrannte Streifen" als Grillergebnis.

Auf dem neuesten Stand der Ernährungswissenschaft ist es mittlerweile unstrittig, dass der dauernde Verzehr scharf gebratenen oder angebrannten Fleisches ein Gesundheitsrisiko ist.

Ein weiterer Nachteil ist auch für diesen Grill, dass das Würstchen nur aus einer einzigen Richtung erhitzt wird. Bei einer dem Lebensmittel angepassten, vorsichtigen Erhitzung ergibt sich in Längsrichtung ein Streifen entlang des Würstchens, der aus sehr kleinen, optimal gegarten Rechtecken besteht, die auf den Stegen auflagen mit dazwischen bereits vorgebratenen, größeren Rechtecken und auf der sonstigen Oberfläche noch nicht ausreichend erhitzten Bereichen.

Durch die Elastizität des Würstchens lässt es sich auf die Stege drücken, sodass die Breite dieses Streifens etwas vergrößert werden kann. Je nach dem Verhältnis zwischen Elastizität und Durchmesser ist jedoch in der Praxis ein 6- bis 8-maliges Drehen des Würstchens erforderlich.

Auch die Offenlegungsschrift DE 100 07 283 beschreibt eine Grillvorrichtung, die aus einer Platte mit zahlreichen, etwa parallel verlaufenden Rinnen besteht. Diese Vorrichtung wird in einer Ausführungsvariante auch mit Seitenwänden am Rand der Grillfläche ausgerüstet und ähnelt dann nicht nur optisch einer Bratpfanne, sondern bereitet die Würstchen auch genau genommen durch Braten und nicht durch Grillen zu. Auch diese Vorrichtung wird durch den wesentlichen Nachteil eingeschränkt, dass das Würstchen nur entlang eines einzigen Streifen in Längsrichtung erhitzt wird und innerhalb dieses Streifens auch nur in zueinander beabstandeten Bereichen mit optimaler Temperatur.

Auf diesem Hintergrund hat sich die Erfindung die Aufgabe gestellt, eine Vorrichtung zum Braten von Würstchen oder von etwa plattenförmigen Lebensmitteln auf einem Grill zu entwickeln, die sowohl Würstchen wie auch plattenförmige Lebensmittel auf einem größeren Teil ihrer Oberfläche als bisher möglichst gleichmäßig und frei von angebrannten Teilbereichen erhitzt und dabei die aus dem Lebensmittel austretende Menge an Fett und anderen Flüssigkeiten reguliert und zur vollständigen Zubereitung eine sehr viel geringere Anzahl von mechanischen Bewegungen auf dem Grill erfordert.

Zur Lösung dieser Aufgabe lehrt die Erfindung, dass die Rinnen im wesentlichen aus drei Streifen bestehen, die an ihren Längskanten zu einem nach oben offenen Profil verbunden sind und wenigstens eine Wurst mit wenigstens zwei, zueinander beabstandeten, länglichen Bereichen ihrer Außenhaut je einen der drei Streifen einer Rinne berührt.

Dazu ist es eine Voraussetzung, dass die zu erhitzenden Würste in Längsrichtung in die Rinnen der Bratfläche eingelegt werden, was natürlich nur dann möglich ist, wenn die Breite der Rinnen wenigstens etwa so groß ist wie der größte Durchmesser der Wurst.

Beim Braten von Würsten bietet der erfindungsgemäße Brataufsatz durch die Merkmale seiner Formgebung besondere und bisher nicht bekannte Verhältnisse zwischen dem zuzubereitenden Lebensmittel und der erhitzten Oberfläche und verbindet die Vorteile des Bratens mit den Vorteilen des Grillens ohne deren Risiken:
Von der nach unten hin zur Wärmequelle weisenden Fläche des Lebensmittels hat größenordnungsmäßig etwa die Hälfte direkten Kontakt mit der erhitzten Fläche. Die Situation des Lebensmittels hat im Inneren der Kontaktflächen einiges mit der Situation eines Lebensmittels in einer Bratpfanne gemeinsam. Durch den direkten Kontakt wird ein hohes Maß an thermischer Energie übertragen, so dass nicht nur die äußeren Bereiche des Lebensmittels gegart werden, sondern auch die tiefer innerhalb des Lebensmittels gelegenen Bereiche.

Zwischen dem Lebensmittel und der erhitzten Fläche befindet sich Fett und Wasser, das aus dem Lebensmittel ausgetreten ist. Durch seine Fließfähigkeit und durch seine gute thermische Leitfähigkeit bildet es eine thermische Brücke für den Übergang der Energie von der Wärmequelle zum Lebensmittel - und zwar auch in den Bereichen, wo sich Lebensmittel und erhitze Fläche nicht berühren, sondern nur ganz dicht beieinander stehen. In diesen Bereichen wird aber auch das Fett davor geschützt, sich ungebührlich zu erhitzen, also bis in den Temperaturbereich hinein, wo sich die ungesunden Transfettsäuren bilden.

Wissenschaftliche Untersuchungen haben bestätigt, dass Nahrungsmittel mit höheren Anteilen von Transfettsäuren eine Gesundheitsgefahr sind. Nachteilige Auswirkungen von Transfettsäuren sind ein erhöhtes Krebsrisiko, überhöhter Blutdruck, reduzierte Insulinempfindlichkeit und in Folge Diabetes sowie diverse Allergien.

Ein hoher Konsum von Transfettsäuren gilt insbesondere als eine Ursache für einen zu hohen LDL-Spiegel im Blutserum (Low Density Lipoprotein, umgangssprachlich auch "schlechtes" Cholesterin genannt) und für einen Abfall des HDL-Spiegels (High Density Lipoprotein, umgangssprachlich auch als das "gute" Cholesterin bezeichnet), was zu Arteriosklerose und in deren Folge zu einem erhöhten Risiko für einen Herzinfarkt oder einem Schlaganfall führen kann.

Insbesondere in Würstchen sind oft Fette enthalten, die durch deren Herstellungsprozess teilgehärtet worden sind. Durch eine weitere Erhitzung werden sie zu gehärteten Transfettsäuren umgewandelt.

Studien haben gezeigt, dass Erwachsene nicht mehr als zwei bis drei Gramm an Transfettsäuren pro Tag zu sich nehmen sollten. Ein täglicher Verzehr von fünf Gramm der Transfettsäuren steigert das Risiko einer koronaren Herzerkrankung um 25 %.

Diese Menge wird durch Würste, die mit Geräten nach dem bisherigen Stand der Technik gegrillt worden sind und etliche dunkelbraune oder schwarzbraune Streifen aufweisen, in dramatischem Umfang überschritten.

Aber auch vom herkömmlichen Braten, also dem Erhitzen durch einen sehr großflächigen Kontakt zwischen Lebensmittel und erhitzter Fläche ist es bekannt, dass es insbesondere in den Kernbereichen großer Flächen leicht zu einer Überhitzung kommen kann.

Der Grund dafür ist, das entweder zu heißes Fett im Übermaß vorhanden ist oder die Fettmenge so gering ist, dass das Lebensmittel der erhitzten Fläche derart nahe kommt, dass es überhitzt wird und damit auch die - geringe - Fettmenge.

Erfahrungsgemäß ist beim Braten das Risiko der Überhitzung in den Randbereichen eines Lebensmittels am geringsten.

Die Erfindung nutzt diesen Effekt, indem sie sehr zahlreiche, schmale Flächen mit direktem Kontakt zwischen Lebensmittel und erhitzter Fläche aufweist.

Ein weiteres, ebenso wichtiges Merkmal der Erfindung ist, dass zwischen den Flächen mit direktem Kontakt jeweils eine weitere Fläche angeordnet ist, mit der das Lebensmittel einen geringen Abstand zur erhitzten Fläche einnimmt.

In diesen Bereichen laufen zwei Prozesse parallel ab: Zum einen sind diese Bereiche der Strahlungswärme ausgesetzt. Sie werden also gegrillt, wodurch in diesen Bereichen die willkommene goldbraune Färbung und die Bildung einer dünnen Kruste unterstützt werden.

Der andere, ebenso willkommene Effekt ist der Transport überschüssigen Fettes. Es kann in den etwa dreieckig profilierten Hohlräumen zwischen zwei benachbarten Streifen und der Wurst entlang fließen. Dadurch werden überschüssige Fettmengen innerhalb der Rinne abtransportiert. Sie gelangen entweder zu einem Bereich mit einem Fett-Defizit und gleichen dieses aus, indem die benötigte Teilmenge an- und aufgesaugt wird. Überschüssiges Fett fließt in den etwa dreieckig profilierten Hohlräumen weiter und aus den kritischen Bereichen heraus.

Ein entscheidendes Merkmal der Erfindung ist also die Form der Rinnen. Jede Rinne eines erfindungsgemäßen Brataufsatzes besteht aus drei etwa ebenen Streifen, die winklig zueinander angeordnet sind.

Wenn der größte Durchmesser der Wurst kleiner ist als die Breite der Rinne, dann wird sie zumindest mit zwei länglichen Bereichen ihrer Außenhaut auf je einem Streifen der Rinne aufliegen. Und auch wenn der mittlere Streifen der Rinne relativ schmal im Vergleich zur Breite der angrenzenden Wandstreifen ist, und der Durchmesser der Wurst deutlich größer als die Breite des mittleren Streifens ist, berührt die Wurst zwei Streifen der Rinne. Durch diesen Flächenkontakt wird sie auf zwei länglichen, streifenförmigen Bereichen ihrer Außenhaut optimal gebraten.

In diesen Bereichen wird die Wärme nicht durch Strahlung auf die Würste übertragen, sondern durch Konvektion der thermischen Energie aus dem zumeist metallischen Material der Rinne direkt auf die Außenfläche der Wurst.

Im Unterschied zu bisher bekannten Verfahren werden die Würste also nicht nur in einem einzigen, streifenförmigen Bereich durchgehend optimal zubereitet, sondern - je nach dem Verhältnis ihres Durchmessers zu der Breite der Rinne - zumindest entlang von zwei Streifen oder sogar entlang von drei Streifen optimal gebraten.

Wenn die Breite der Rinne im etwa dem Durchmesser der Wurst entspricht und der Winkel zwischen dem mittleren Streifen und den beiden angrenzenden Wandstreifen größer als 90 Grad ist und der mittlere Streifen etwas schmäler als der Durchmesser der Wurst ist, liegt sie sogar auf jedem der drei Streifen auf. Dann berührt die Wurst durch ihre Elastizität die Oberfläche der Rinne also auf drei streifenförmigen Bereichen, die parallel zu ihrer Längsachse verlaufen.

Die dazwischen liegenden Bereiche sind noch nicht fertig gebraten, sondern nur durch Strahlungswärme erhitzt. Sie müssen noch durch eine geringe Verschwenkung der Wurst um ihre Längsachse in Kontakt mit den Wandstreifen und/oder dem mittleren Streifen der Rinne gebracht werden. Die bereits fast fertig gegarten, ehemaligen "Kontaktbereiche" werden dann durch Strahlungswärme noch etwas nachgegrillt. Die Anzahl der dafür erforderlichen Wendungen beträgt im Vergleich zu anderen, bekannten, ebenen Bratflächen jedoch nur die Hälfte oder - bei optimaler Anpassung des Durchmessers - sogar nur ein Drittel. Dadurch wird eine deutliche Reduzierung der notwendigen Bratzeit erreicht.

Ein weiterer Vorteil ist, dass innerhalb eines jeden Streifens das Garergebnis besser ist als bei den bisher bekannten Grillgeräten, die nur im Bereich der Auflage auf den Gitterosten ein optimales Ergebnis erreichen können.

Ein weiterer bereits genannter Vorteil der erfindungsgemäßen, trapezförmigen Rinne zum Braten ist, dass sich zwischen den streifenförmigen Bereichen mit direktem Kontakt zur Wurst in der Rinne schmale, längliche Zonen bilden, in denen ein kleiner Hohlraum zwischen Rinne und Wurst entsteht. Dieser Hohlraum wird durch Fett und/oder Feuchtigkeit gefüllt, die aus der Wurst austritt. Darüber hinaus anfallende Mengen von flüssigem Fett oder anderer Flüssigkeit verteilen sich in der Rinne. Wenn die Rinne zusätzlich etwas geneigt ist, dann fließen diese überschüssigen Flüssigkeitsmengen entlang der Rinne ab.

Auch wenn die Wurst mit erhöhter Kraft in die Rinne eingepresst wird, wird in den beiden Winkeln zwischen dem mittleren Streifen der Rinne und den beiden angrenzenden Wandstreifen stets etwas Flüssigkeit verbleiben. Diese geringe Flüssigkeitsmenge ist sehr willkommen, um bei der nächsten Wendung als Gleitmittel für eine leichte Verschwenkung der Wurst zu dienen und um die gewünschte, goldbraune Beschaffenheit der fertig gebratenen Wurstoberfläche zu erzielen.

In einer weiteren, vorteilhaften Ausführungsvariante wird der Abtransport überschüssiger Fettmengen durch eine Neigung der Rinne verstärkt.

Die geneigten Rinnen können in eine etwa quer dazu verlaufende, ebenfalls geneigte Sammelrinne übergehen, die auf diese Weise für einen weiteren Abtransport von Flüssigkeiten sorgt, die beim Braten aus der Wurst austreten oder von außen dazu gegeben werden.

Für Würste mit einem besonders hohen Fettanteil kann eine besonders hohe Kapazität zum Abführen nicht benötigter Fettmengen wünschenswert sein. In diesem Fall ist es sinnvoll, die Breite des mittleren Streifens im Verhältnis zum Durchmesser der Wurst sehr klein zu wählen. Im Extremfall kann der mittlere Streifen so schmal sein, dass er fast nur noch aus den Krümmungen des Überganges zwischen den beiden Wandflächen besteht.

Dann liegt die Wurst nicht mehr auf dem mittleren Streifen auf, sondern nur noch auf den beiden Wandstreifen. Dadurch bilden sich nicht mehr zwei Hohlräume unterhalb der Wurst, sondern nur noch ein einziger, der jedoch einen größeren Querschnitt aufweist, wodurch nicht benötigte Fett- und Feuchtigkeitsmengen leichter abfließen können.

In der Praxis wird das Profil der Rinnen zumeist wannenförmig oder - bei extrem schmalen mittleren Streifen - etwa V-förmig sein. Der Winkel zwischen dem mittleren Streifen und den beiden Randstreifen wird also in einem Bereich zwischen etwa 100 und 140 Grad liegen.

Es ist jedoch durchaus denkbar, dass für besondere Anwendungen dieser Winkel auch eine andere Größe hat und sogar kleiner als 90 Grad sein kann, sodass die Rinne das Profil einer Nut mit einer Hinterschneidung aufweist. In diesem Fall kann nur eine relativ sehr elastische Wurst in die nutförmige Rinne eingebracht werden. Der Vorteil ist, dass sie dann darin festgehalten wird und nicht so leicht - z.B. durch Wind und/oder Erschütterungen - aus der Rinne wieder herausbewegt werden kann. Das kann z. B. bei der Anwendung auf schwankenden Schiffen, in Flugzeugen oder in Bahnen ein Vorteil sein.

Denkbar ist auch, dass nur einer der beiden Winkel zwischen mittlerem Streifen und Wandstreifen kleiner als 90 Grad ist. Dann können sehr dünne Würstchen in diesen kleinen Winkel hineingedrückt werden und dort relativ schnell fertiggebraten werden, da die Breite der Streifen im Verhältnis zu ihrem Durchmesser sehr groß ist. In der gleichen Rinne können dann auch relativ größere Würstchen ebenfalls verarbeitet werden. Der Vorteil dieser Konfiguration ist also eine relativ große Bandbreite des Durchmessers der zu bratenden Würstchen.

Denkbar ist auch, dass der linke Wandstreifen eine andere Breite aufweist als der rechte Wandstreifen, so dass der mittlere Streifen nicht eben verläuft sondern geneigt. Das kann z. B. dann ein Vorteil sein, wenn sich beim Erhitzen der Wurst zusätzlich zum Fett noch andere Flüssigkeiten absondern, die relativ sehr schnell abfließen sollen, sich also auf der Fläche des mittleren Streifens nicht verteilen sollen, sondern sich möglichst schnell in einem Randbereich der Streifen konzentrieren sollen.

In einer besonders praxisgerechten Konfiguration beträgt die Breite des mittleren Streifens etwa ¼ der Breite des breiteren, angrenzenden Wandstreifens.

Für die Praxis ist es in der Regel vorteilhaft, wenn zwischen dem mittleren Streifen und den beiden angrenzenden Wandstreifen ein gekrümmter Bereich eingefügt ist. Dann geht die Fläche des mittleren Streifens stetig zu den Wandstreifen über und bildet keine scharfen Kanten, wodurch die Reinigung der Rinne erheblich vereinfacht ist.

Ein weiterer Vorteil ist, dass eine solche Konfiguration mit verhältnismäßig geringem Aufwand durch das mehrfache Abkanten einer Blechplatte herstellbar ist.

Es ist bei einer erhöhten Menge des aus der erhitzten Wurst austretenden flüssigen Fettes oder anderer Flüssigkeiten sinnvoll, dass die Rinne zum Braten über ihre Längsachse hinweg gegenüber der Horizontalen geneigt verläuft. Dann sammeln sich alle Flüssigkeiten an einem Ende, sodass die Wurst trotzdem gebraten und nicht etwa in der Flüssigkeit gekocht wird.

Es ist eine Ausführungsvariante der Erfindung, dass alle Rinnen zum Braten mit einer durchgehenden Sammelrinne verbunden sind, die aus den Rinnen austretende Fette und Feuchtigkeiten auffangen. Zur Vermeidung eines Flüssigkeitsstaus in dieser Sammelrinne ist es sinnvoll, dass sie ebenfalls geneigt verläuft. Wenn die anfallenden Fett- oder Flüssigkeitsmengen sehr groß sind, dann kann es opportun sein, das am Ende einer derartig geneigt verlaufenden Sammelrinne ein Sammelbehälter angeordnet ist, in dem sich die Flüssigkeit sammelt und von dort aus entsorgt werden kann.

Damit die Fett- und Flüssigkeitsmengen aus den Rinnen nur in die Sammelrinne fließen, sollte ihr jeweils freies Ende durch eine Querwand verschlossen werden.

Als eine weitere Ausführungsvariante schlägt die Erfindung vor, dass die Bratfläche und die Sammelrinne gemeinsam eine geschlossene Fläche bilden. Dadurch wird Luft, die unterhalb der Sammelrinne und der Rinnen zum Braten erhitzt wird, nicht durch die Öffnungen zwischen Bratfläche und Sammelrinne heraus strömen sondern sich unterhalb der Rinnen verteilen, wodurch der Wirkungsgrad des Brataufsatzes verbessert wird.

Wie erwähnt, ist es zu bevorzugen, dass die Breite der Bratrinnen etwa dem größten Durchmesser der zu bratenden Würste entspricht, weil dann die Wurst mit drei Bereichen ihrer Außenhaut an je einem Streifen der erfindungsgemäßen trapezrinnenförmigen Bratfläche anliegt.

Um mit einer einzigen Bratfläche Würste verschiedenen Durchmessers optimal braten zu können, ist eine Variante sinnvoll, die in einer Bratfläche Rinnen mit verschiedenen Durchmessern aufweist, sodass "dünne" und "dicke" Würste gleichzeitig gebraten werden können.

Die Anwendung eines erfindungsgemäßen Brataufsatzes ist jedoch nicht nur auf Würste beschränkt, sondern es können auch alle anderen, ähnlich geformten Lebensmittel gebraten werden, wie z. B. Würste, Fische, Gurken, Karotten, Filetstreifen und ähnliches. Für ein optimales Bratergebnis ist es - wie vielfach erwähnt - am besten, wenn das Bratgut in flächigem Kontakt mit der Bratfläche tritt. Wenn das Bratgut keinen exakt zylindrischen Querschnitt aufweist, wie z. B. eine Wurst, sondern sich verjüngt, wie z. B. bei einem Fisch oder einer Karotte, dann ist es sinnvoll, dafür eine sich entsprechend verjüngende Rinne bereitzustellen. Dadurch kann z. B. auch der Schwanzbereich eines Fisches optimal gebraten werden, da er ebenfalls flächigen Kontakt zur Bratfläche bekommt.

Für eine besonders gute Anpassung ist es auch denkbar, dass die Breite der Rinne entsprechend den jeweils effektiven Durchmessern des Bratgutes gestaltet ist. lm ldealfall entspricht also die Silhouette des Bratgutes der Silhouette der Rinne. Die Rinne kann dafür z. B. in der Mitte die größte Breite aufweisen.

Im Sinne eines möglichst energiesparenden Betriebes des Brataufsatzes ist es sinnvoll, dass die Bratfläche die Wärmequelle vollständig abdeckt, sodass möglichst viel Strahlungswärme und möglichst viel Konvektionswärme genutzt wird. Dafür schlägt die Erfindung vor, dass möglichst alle Spalte zwischen den Außenkanten der Wärmequelle und der Bratfläche verschlossen sind.

Die Bratfläche besteht sinnvoller Weise aus einem Material mit besonders hoher Wärmeleitfähigkeit, damit die von unten aufgebrachte thermische Energie der Wärmequelle möglichst vollständig an das Bratgut weitergeleitet wird, weshalb die Bratfläche in der Praxis meist aus Metall hergestellt wird. Sinnvoll ist Stahl, aber auch Aluminium ist geeignet. Daraus können z. B. Aufsätze zur einmaligen Verwendung geformt werden.

Die Ausprägung der Rinnen kann durch Ausgießen einer Form oder durch Pressen eines Bleches erzeugt werden. Beide Verfahren benötigen jedoch entsprechende Formen, die insbesondere bei mittleren und kleinen Stückzahlen das Endprodukt relativ teuer machen.

Insbesondere dann, wenn eine optimale Anpassung der Rinnenbreite an die zu bratenden Würste angestrebt wird, sind Rinnen mit verschiedenen Breiten erforderlich, wofür eine große Anzahl von Formen mit verschiedenen Breiten bereit zu halten ist. Wenn mit diesen Formen nur Einzelstücke oder Kleinserien gefertigt werden, fällt der Anteil ihrer Kosten besonders stark ins Gewicht.

Deshalb schlägt die Erfindung als alternative Fertigungsform vor, dass die Bratfläche durch das Abkanten von Stahlblech hergestellt wird. Sie kann dann mit der Sammelrinne verschweißt werden. Ebenso können die Querwände als Abschluss der Rinnen und der Sammelrinne eingeschweißt werden.

In der Praxis werden in den meisten Fällen die Rinnen auf der Bratfläche parallel zueinander verlaufen und über ihre Länge hinweg ein konstantes Profil aufweisen. Für diesen Anwendungsfall ist es möglich, zur Anpassung an verschiedene rechteckige Wärmequellen mit verschiedenen Abmessungen Abdeckplatten zu konfigurieren, mit denen die Öffnungen zwischen der Wärmefläche und der Bratfläche verschlossen werden können. Diese Abdeckplatten weisen an ihrer Oberkante ein etwa mäandrierendes Profil auf, das dem trapezförmigen Profil der Rinnen der Bratfläche entspricht. Diese Abdeckplatten können dann über die Breite der Bratfläche hinweg an einer beliebigen Stelle angebracht werden, sodass die Bratfläche auf Wärmequellen beliebiger Breite mit einem seitlichen Luftabschluss aufgesetzt werden kann. Dazu müssen zwei derartige Abdeckplatten parallel zueinander und im Abstand zueinander verstellbar angebracht werden können.

Um die verbleibenden beiden Öffnungen zwischen der Bratfläche, den beiden Abdeckplatten und der Wärmequelle zu verschließen schlägt die Erfindung vor, dass jede dieser beiden Öffnungen durch je zwei Abdeckbleche verschließbar ist, die sich abhängig von der Breite der Wärmequelle mehr oder weniger überlappen.

In einer weiteren Ausführungsform schlägt die Erfindung vor, dass an den äußeren Kanten der Bratfläche umlaufend vertikale Abdeckplatten angebracht sind, z. B. als vom Blech abgewinkelte Streifen und zwei gegenüberliegende, abgewinkelte Bereiche von wenigstens einer Öffnung durchbrochen sind. Aus diesen beiden Öffnungen steigt Luft auf, die an der Unterseite der Bratfläche vorbei gestrichen ist und sie dabei erhitzt hat. Dieser Effekt ist insbesondere dann sehr deutlich ausgeprägt, wenn die Bratfläche aus Edelstahl, Aluminium oder einem anderen, hell glänzenden Werkstoff besteht, weil dadurch Wärmestrahlen reflektiert werden und die Wärmeübertragung durch Konvektion immer wichtiger wird.

Diese Luftaustrittsöffnungen können sowohl bei einem Brataufsatz mit streng trapezförmigem Profil, wie auch bei der Alternative mit geneigten Rinnen und dazwischen eingefügten Bratflächen und einem in etwa trapezförmigen Profil eingebracht und genutzt werden.

Ausführliche Grillversuche haben gezeigt, dass die Führung der von der Wärmequelle aufsteigende Luft von großer Bedeutung für die schnelle und effiziente Einstellung einer optimalen Grill- und Brattemperatur ist. Die Versuche wurden sämtlichst mit einer Bratfläche ausgeführt, in welche die erfindungsgemäßen, trapezförmigen Rinnen eingebracht worden sind und in die Würste zwecks Zubereitung eingelegt worden sind. Durch Benutzung der gleichen Wärmequelle mit einer offenen Flamme für alle drei Varianten und durch das Einlegen einer gleichen Menge von Brennmaterial wurde sichergestellt, dass die erzeugte Wärmemenge im Rahmen einer praxisnahen Genauigkeit stets die gleiche war.

Im ersten Ansatz wurde eine Bratfläche eingesetzt, die an ihren äußeren Rändern keinerlei senkrechte Stützwände aufwiesen. Stattdessen lagen die Rinnen direkt auf einem Gitter über der Wärmequelle auf.

Mit dieser Konfiguration wurden verschiedene Würstchen zubereitet und die Zeitdauer bis zum optimalen Abschluss des Zubereitungsvorganges als Vergleichsmaßstab notiert.

In einer zweiten alternativen Anordnung wurde an den äußeren Kanten der Bratfläche umlaufend vertikale Abdeckplatten angebracht und miteinander luftdicht verschweißt, sodass sich von der Unterseite her gesehen eine kastenartige Anordnung ergab, in der sich aufsteigende, heiße Luft sammeln konnte. Dadurch lagen die Rinnen der Bratfläche nicht mehr direkt auf dem Gitter oberhalb der Wärmequelle auf, sondern waren etwas dazu beabstandet. Auf dieser Anordnung wurden mit der gleichen Menge und der gleichen Art von Brennmaterial eine etwa gleiche Wärmemenge wie zuvor erzeugt und abgegeben. Auch die darauf gegrillten Würstchen entsprachen dem ersten Versuch. Als Ergebnis wurde ermittelt, dass die Grilldauer nur unwesentlich verkürzt wurde. Daraus ist zu schließen, dass die in der kastenförmigen Ausprägung des Brataufsatzes gesammelte Luft nicht die erhoffte, hohe Strömungsgeschwindigkeit erreicht, sondern vielmehr eine isolierende Wirkung hat, sodass durch das "Einfangen" der aufsteigenden, erwärmten Luft in einer kastenartigen Anordnung keine deutliche Vergrößerung der an die Würstchen übertragenen Wärmemenge möglich ist.

Im dritten Versuch wurde deshalb in der zuvor beschriebenen kastenartigen Anordnung an zwei gegenüberliegenden Kanten die vertikal umlaufende Fläche durch je eine große Luftöffnung durchbrochen. Mit dieser Anordnung konnte eine nennenswerte Verkürzung der Grilldauer erreicht werden. Daraus ist zu schließen, dass eine kanalartige Führung der vom Feuer aufsteigenden, erhitzten Luft eine nennenswerte Vergrößerung der von der Wärmequelle auf die Lebensmittel übertragenen Wärmemenge ermöglicht.

Diese, vorteilhafte Ausführungsform kann sowohl in der Ausführungsvariante der Rinnen mit ebenen Streifen und dann streng trapezförmigem Profil eingesetzt werden. Dann sind die beiden, gegenüberliegenden, nicht mit einer Luftöffnung versehenen, vertikalen Abdeckplatten am Rand der Bratfläche vorzugsweise von gleicher Höhe, sodass die Bratfläche auf einem ebenen Grill ebenfalls eine horizontale Position einnimmt. Alternativ können die beiden Luftöffnungen bzw. mehrere kleinere, durch Stege voneinander getrennte Luftöffnungen auch in zwei einander gegenüber liegende trapezförmige, vertikale Abdeckplatte eingebracht werden. Diesen beiden trapezförmigen Abdeckplatten ist dann jeweils eine hohe Abdeckplatte und eine niedrige Abdeckplatte benachbart, sodass der gesamte Brataufsatz eine pultartige Form einnimmt, die auf einem horizontalen Grill eine geneigte Position der Rinnen und der dazwischen angeordneten Bratstreifen bewirkt. Diese Neigung sorgt dafür, dass auch bei gewölbter Form der Streifen, aus denen die Bratrinnen geformt ist, eine ausreichende Abfuhr von Fett und anderen aus dem erhitzten Lebensmittel austretenden Flüssigkeiten sicher gestellt ist.

Das bisher erläuterte Ausführungsbeispiel eines erfindungsgemäßen Brataufsatzes beschreibt die Anwendung zum Schnellbraten von Würsten und anderen, etwa zylindrisch geformten Lebensmitteln. In einer weiteren Ausführungsvariante können auch etwa plattenförmige Lebensmittel, wie z. B. Steaks oder Schnitzel gemäß den Vorgaben der Aufgabenstellung zubereitet werden, also auf der Oberfläche gleichmäßig und frei von angebrannten Teilbereichen erhitzt werden, wobei die aus dem Lebensmittel austretende Menge an Fett und anderen Flüssigkeiten reguliert wird.

Wenn ein erfindungsgemäßer Brataufsatz ausschließlich für die Zubereitung von zylindrischen Lebensmitteln wie Würsten optimiert ist, dann ist der Grat oder der Steg zwischen den Rinnen zur Aufnahme der Würste möglichst schmal, damit eine möglichst große Anzahl von Würsten auf der gegebenen Fläche des Grills zubereitet werden kann.

Auch in dieser Variante können Steaks oder andere plattenförmige Lebensmittel, wie z. B. Bratlinge zubereitet werden, indem sie über die Grate hinweg aufgelegt werden. Dies hat jedoch die Einschränkung, dass die Lebensmittel nur auf der möglicherweise sehr schmalen Fläche des Grates einen direkten Kontakt mit der erhitzen Fläche hat. An dieser Stelle besteht ein erhöhtes Risiko für eine Überhitzung mit der Bildung von schwarzen Streifen. Diese schwarzen Streifen sind zwar nach dem bisherigen Stand der Technik ein häufiges Merkmal von Steaks und anderen Lebensmitteln, die durch Grillen zubereitet worden sind. Sie stehen jedoch im Widerspruch zur Aufgabenstellung dieser Erfindung, die eine ernährungstechnisch optimale, also gleichmäßige Erhitzung fordert.

Das Problem der übererhitzten Streifen kann gelöst werden, indem das Lebensmittel relativ häufig um die Breite dieses Grates weiter geschoben wird und so mit jedem Teilbereich seiner gesamten Fläche jeweils einmal in Kontakt mit der erhitzten Fläche kommt.

Die Einschränkung dabei ist jedoch, dass dann der zeitliche Anteil, während dessen die nicht auf den Graten aufliegenden Fläche der Strahlungswärme aus den Rinnen ausgesetzt sind, relativ hoch ist, was dann bei der Verweildauer auf den Graten zu berücksichtigen ist.

Eine weitere Einschränkung ist, dass eine relativ genaue Positionierung erforderlich ist, die von oben her nicht kontrolliert werden kann, da die aufliegende Unterseite nicht sichtbar ist. Deshalb schlägt die Erfindung als eine Ausführungsvariante vor, dass zwischen die Rinnen ebene Bratstreifen eingefügt sind, auf denen wenigstens ein plattenförmiges Lebensmittel aufliegen kann.

Dann kann aus dem plattenförmigen Lebensmittel austretendes Fett in die Rinnen tropfen und dort abfließen. Damit dieser Fluss unterstützt wird, schlägt die Erfindung vor, dass in der Ausführungsvariante mit Bratstreifen zumindest die Rinnen grundsätzlich gegenüber der horizontalen leicht geneigt verlaufen und an ihrem tiefsten Punkt in eine Sammelrinne übergehen.

Da auf diese Weise der Abtransport des überschüssigen Fettes unterstützt wird, kann die Trapezform des Rinnenprofils etwas freier gestaltet werden. Die Streifen müssen dann nicht mehr grundsätzlich eine Ebene bilden, sondern können auch leicht gekrümmt sein. Wenn sie zum Innenraum der Rinne hin konkav gewölbt sind, vergrößert sich dadurch die Auflagefläche von Würsten, die in die Rinne eingelegt werden. Wenn die Streifen zum Innenraum der Rinne hin konvex gewölbt sind, also wulstartig in die Rinne hereinragen verkleinert sich die Auflagefläche des Würstchens. Dadurch sind Varianten in der Zubereitung möglich.

Trotz dieser etwas größeren Freiheit bei der Gestaltung der Profile ist dennoch ein ebenso guter Abtransport überschüssiger Flüssigkeiten gesichert, weil die Rinnen in dieser Variante grundsätzlich geneigt verlaufen.

Es ist dann möglich, dass eine Wurst mit nur einem länglichen Bereich ihrer Außenhaut auf wenigstens zwei der drei Streifen einer Rinne aufliegt, indem sie durch ihre Elastizität an die Form der Streifen soweit angepresst wird, dass sie den Übergang zwischen zwei zueinander benachbarten Streifen formschlüssig überbrückt.

Diese Variante ist vor allem dann sinnvoll, wenn aus den Würsten zumeist nur sehr wenig Fett austreten wird, sodass der Ablauf innerhalb der Rinne nur ein begrenztes Volumen erfordert.

Selbstverständlich ist auch in der Variante mit Bratstreifen zwischen den Rinnen ein streng trapezförmiges Profil der Rinne möglich und sinnvoll. Dann sind die Streifen eben, sodass eine in die Rinnen eingelegte Wurst mit wenigstens zwei, zueinander beabstandeten, länglichen Bereichen Ihrer Außenhaut je einen der drei Streifen einer Rinne berührt.

Unabhängig von dem gewählten Profil der Rinne kann ein plattenförmiges Lebensmittel, dass wegen seiner Größe nicht innerhalb der Rinnen platzierbar ist, auf den Bratstreifen zubereitet werden. Dabei ist es insbesondere sinnvoll, dass die Bratstreifen etwa so breit wie die Rinnen sind und parallel zueinander verlaufen. Dann bietet sich als Verfahren zum Schnellbraten eines etwa plattenförmigen Lebensmittels an, dass es während der ersten Hälfte der gesamten Zubereitungszeit erhitzt wird, ohne es zu verschieben und dann quer zu den Bratstreifen um genau die Breite der Bratstreifen verschoben wird und dann im zweiten Schritt während der zweiten Hälfte der gesamten Zubereitungszeit weiter erhitzt wird, ohne es zu verschieben. Dadurch gerät jeder Bereich der Fläche des Lebensmittels einmal in direktem Kontakt mit der erhitzten Fläche. Derweil wird er in dem anderen, jeweils nicht aufliegenden Bereich durch Strahlungswärme aus der Rinne weiter gegrillt. Das bewirkt für die eine Hälfte der Fläche eine Vorerhitzung im Vorlauf und für die andere Hälfte der Fläche ein Nachgrillen im Nachlauf, sodass über die gesamte Fläche hinweg als Zubereitungsergebnis die gewünschte goldbraune Färbung eines Fleischstückes erreicht werden kann.

Auch in dieser Ausführungsvariante ist es ein wesentlicher Vorteil des erfindungsgemäßen Zubereitungsverfahrens, das eine aus dem Lebensmittel austretende, überschüssige Fettmenge durch die Rinnen abtransportiert wird und weder in ein offenes Feuer tropfen kann, noch allzu lange unterhalb des Lebensmittels verbleibt. Die Gefahr einer unerwünschten Schwärzung des Lebensmittels durch Fett, das in eine offene Flamme herabtropft, dort in Brand gerät und das Lebensmittel verrußt und/oder überhitzt ist dadurch ebenso eliminiert wie die Gefahr des Verbrennens durch eine zu große Menge an allzu hoch erhitztem Fett, die in direktem Kontakt mit dem Lebensmittel tritt.

Vielmehr wird durch eine große Anzahl von Bratstreifen erreicht, dass die gesamte Fläche mit einem direkten Kontakt zwischen plattenförmigen Lebensmittel und erhitzter Fläche in relativ zahlreiche schmale Bereiche aufgeteilt wird. Bekanntermaßen ist das Grillergebnis in den Randbereichen einer Kontaktzone relativ das Beste, sodass also ein Zuwachs an dieser Flächenart für ein prinzipiell besseres und ernährungstechnisch vorteilhafteres Grillergebnis sorgt.

In der Ausführungsvariante mit Bratstreifen zwischen den Rinnen sieht die Erfindung - wie bereits definiert - vor, dass zumindest die Rinnen grundsätzlich geneigt verlaufen, vorzugsweise jedoch auch die Bratstreifen geneigt ausgebildet sind, sodass sich auch dort während des Kontaktes austretende, überschüssige Fettmengen nicht ablagern, sondern abfließen können.

Um dafür den gesamten Brataufsatz gegenüber der Oberfläche einer horizontalen Wärmequelle zu neigen schlägt die Erfindung vor, dass am Rand und/oder innerhalb der Bratfläche nach unten weisende, trapezförmige Streifen oder Segmente dieser Streifen senkrecht zur Bratfläche ausgerichtet sind, deren Unterkanten in einer Ebene angeordnet sind, so dass der mittlere Streifen der Rinnen geneigt verläuft. Diese trapezförmigen Streifen sorgen also für eine "Schrägstellung" des Brataufsatzes. Ähnlich wie ein Keil bewirken sie, dass der Brataufsatz an einer Kante etwas weiter von der Grillfläche entfernt ist als an der gegenüberliegenden Kante.

Diese trapezförmigen Streifen können in einer sehr einfachen Ausführungsform von zwei einander gegenüberliegenden Kanten des Brataufsatzes ausgehend nach unten hin abgewinkelt werden. Um die Belastbarkeit des Brataufsatzes beim Einlegen und beim Wenden des Grillgutes weiter zu erhöhen, ist es sinnvoll auch innerhalb der Fläche solche trapezförmigen Streifen auszubilden.

Wenn der Brataufsatz z. B. aus Blech durch Pressen hergestellt wird, ist es sinnvoll, solche trapezförmigen Streifen innerhalb der Fläche doppellagig und mit einem V-förmigen Profil auszubilden, sodass sie während einer Pressung des Blechstückes in gleichem Fertigungsschritt mit ausgeformt werden. Insbesondere für schalenförmige Brataufsätze die nur zur einmaligen Verwendung gedacht und daher aus relativ dünnem Aluminiumblech geformt sind ist die Ausprägung von mehreren solcher trapezförmigen Stützen innerhalb der Bratfläche ein mechanischer Vorteil, da dann trotz der relativ geringen Materialstärke des Aluminiumbleches dennoch eine gewünschte "Schrägstellung" der gesamten Einheit nicht nur direkt nach der Fertigung sondern auch nach einer längeren Benutzung mit mehrfachem Wenden des Grillgutes gesichert ist.

Im Folgenden sollen weitere Einzelheiten und Merkmale der Erfindung anhand von zwei Beispielen näher erläutert werden. Diese sollen die Erfindung jedoch nicht einschränken, sondern nur erläutern. Es zeigt in schematischer Darstellung:
- Figur 1: Mehrere Bratrinnen und eine Sammelrinne als Teil- stücke einer erfindungsgemäßen Bratfläche
- Figur 2: Pultartiger Brataufsatz mit Bratstreifen und seitlichen Luftöffnungen

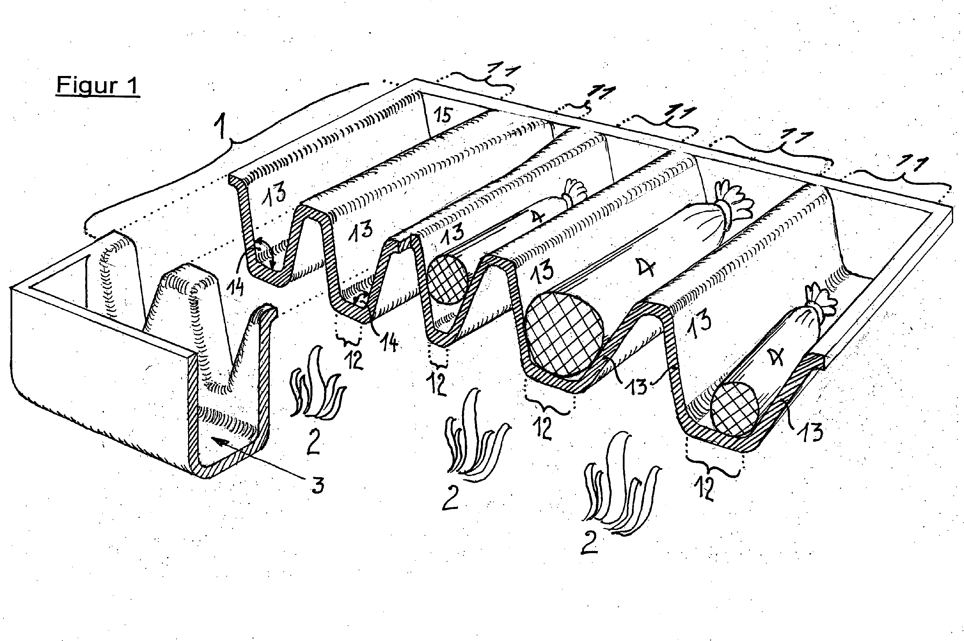

In Figur 1 sind zeichnerisch mehrere Rinnen 11 und eine Sammelrinne 3 als zwei Teilstücke aus einer erfindungsgemäßen Bratfläche 1 herausgeschnitten und perspektivisch dargestellt. In das im hinteren Teil der Figur 1 gezeigte Teilstück der Bratfläche 1 sind insgesamt fünf Stück Rinnen 11eingeformt, die sich in diesem Ausführungsbeispiel jeweils in ihrer Breite unterscheiden.

Mit Ausnahme der mittleren Rinne 11 ist bei den anderen vier Rinnen 11 der mittlere Streifen 12 etwa halb so breit wie die beiden angrenzenden Wandstreifen 13. Die beiden Wandstreifen 13 sind jeweils von gleicher Länge und der Winkel 14 zwischen dem mittleren Streifen 12 und den beiden angrenzenden Wandstreifen 13 beträgt etwa 110 Grad.

In die ganz vorne dargestellte Rinne 11 ist eine relativ dünne Wurst 4 eingelegt, deren Durchmesser deutlich kleiner als die Breite der Rinne 11 ist. In Figur 1 wird sehr gut sichtbar, dass die Wurst 4 diese Rinne 11 nur entlang zweier Streifen flächig berührt und zwar den mittleren Streifen 12 und den rechten der beiden angrenzenden Wandstreifen 13. Dadurch wird schnell deutlich, dass die Auflagefläche der Wurst 4 auf der Bratfläche 1 doppelt so groß ist wie bei bisher bekannten, ebenen Bratflächen, die nur auf einem einzigen Streifen von der Wurst berührt wird.

In der - von der vorderen Kante aus gesehen - zweiten Rinne 11 ist der Durchmesser der Wurst 4 nahezu ebenso groß wie die Breite der Rinne 11. Dadurch liegt die Wurst 4 nicht nur auf den mittleren Streifen 12 der Rinne 11 sondern auch auf beiden Wandstreifen 13 auf. Bei diesem Verhältnis des Durchmessers der Wurst im Verhältnis zur Breite der Rinne, ist die Auflagefläche der Wurst 4 wenigstens drei mal so groß wie bei bisher bekannten, ebenen Bratflächen.

Für die in den beiden vordersten Rinnen dargestellten Verhältnisse zwischen Wurstdurchmesser und Rinnenbreite verbleibt zwischen den berührenden Streifen immer noch ein schmaler Bereich, in dem die Wurst 4 zur Bratfläche 1 beabstandet ist. ln diesen Bereichen können sich Fett und Flüssigkeit sammeln. In Figur 1 ist leicht nachvollziehbar, dass die dort gesammelte Fettmenge beim "Weiterdrehen", also dem Verschwenken der Wurst 4 um ihre Längsachse mitgenommen wird und dann einen dünnen Film zwischen der Kontaktfläche der Wurst 4 in der Rinne 11 und der Oberfläche der Wurst 4 bildet.

In der mittleren der dargestellten fünf Rinnen 11 beträgt die Breite des mittleren Streifens 12 etwa ¼ der Breite der angrenzenden Wandstreifen 13. Die in diese Rinne eingelegte Wurst 4 weist einen Durchmesser auf, der breiter als der mittlere Streifen 12, aber kleiner als die Breite der Rinne 11 ist. In dieser Konfiguration berührt die Wurst 4 nur die beiden Wandstreifen 13, nicht aber den mittleren Streifen 12. Diese Konfiguration bietet einen besonders großen Hohlraum zwischen der Wurst 4 und dem mittleren Streifen 12, ist also für Fälle geeignet, in denen ein besonders große Menge an austretendem Fett und austretender Flüssigkeit zu erwarten ist. Diese Konfiguration könnte insbesondere auch für das Braten von stark wasserhaltigem Gemüse, wie z. B. Karotten und Gurken geeignet sein.

Die vorletzte Rinne 11 weist eine über ihre Länge hinweg veränderte Breite auf. In der dargestellten Schnittfläche hat sie die gleiche Breite wie die angrenzende, ganz hinten eingebrachte Rinne 11, zum äußeren Rand hin wird diese Rinne jedoch deutlich schmaler. Sie ist damit für das Braten von Fischen oder anderen, sich gegen ihr Ende hin zuspitzenden Lebensmitteln, wie z. B. Möhren geeignet. Die ganz hinten dargestellte Rinne 11 dient zur Darstellung des Winkels 14 zwischen dem mittleren Streifen 12 und dem angrenzenden Wandstreifen 13.

Unterhalb der dargestellten Bratfläche 1 sind je drei Flammen gezeichnet, die jeweils eine Wärmequelle 2 symbolisieren.

Im vorderen Teil der Figur 1 ist ein zeichnerisch herausgeschnittenes Teil der Sammelrinne 3 perspektivisch dargestellt. Dadurch wird sehr gut sichtbar, dass die Sammelrinne 3 nach außen hin geschlossen ist, sodass kein flüssiges Fett austreten kann. Nach innen zur Bratfläche 1 hin ist die Sammelrinne 3 mit mehreren trapezförmigen Öffnungen versehen, die jeweils in eine Rinne 11 übergehen.

In Figur 1 ist gut nachvollziehbar, dass durch eine geringfügige Neigung jeder Rinne 11 eine darin befindliche Flüssigkeit schnell in die Sammelrinne 3 an der Vorderkante abfließt. Wenn die Sammelrinne 3 auch geneigt ist, dann fließt die Flüssigkeit aus dieser Rinne ebenfalls schnell heraus. Damit die Flüssigkeit dabei nur in eine Richtung ausfließt, sind die jeweils freien Enden der Rinnen 11 durch eine Querwand 15 verschlossen.

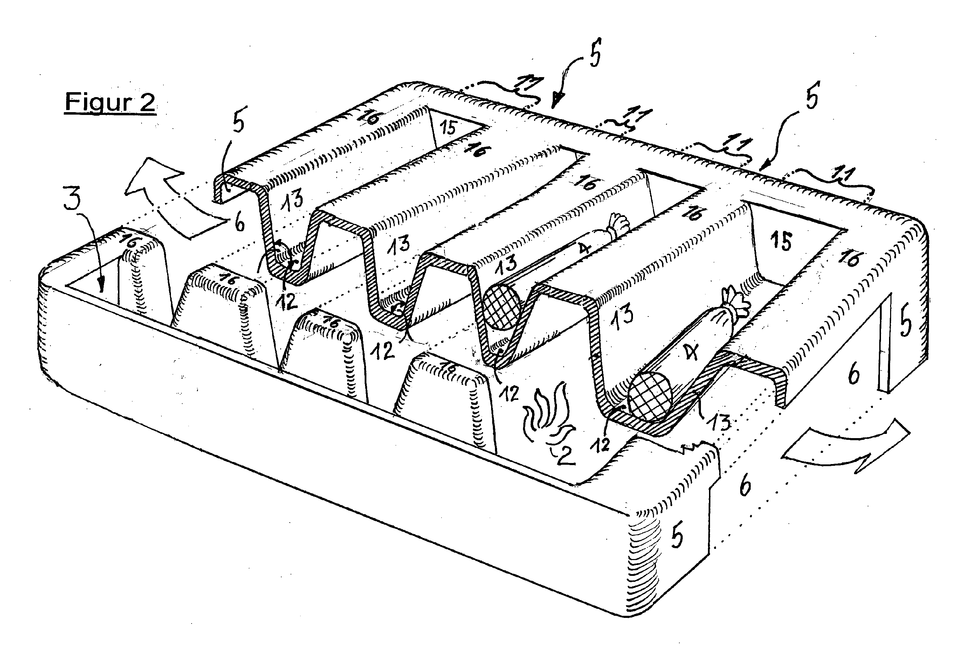

In **Figur 2** ist eine alternative Ausführungsform des erfindungsgemäßen Brataufsatzes gezeigt, die nicht nur für das Zubereiten von etwa zylindrischen Lebensmitteln geeignet ist, sondern auch für etwa plattenförmige Lebensmittel. Der Vergleich zwischen Figur 1 und Figur 2 macht sofort deutlich, dass in Figur 2 der Abstand zwischen den Rinnen 11 sehr viel größer ist, weil die ebenen Bratstreifen 16 eingefügt worden sind. Darauf können die etwa plattenförmigen Lebensmittel zubereitet werden, die für das Einlegen in die Rinnen zu groß sind.

In Figur 2 ist die besonders interessante Variante gezeigt, dass die Rinnen 11 und die Bratstreifen 16 etwa die gleiche Breite aufweisen. In Figur 2 ist nachvollziehbar, dass ein plattenförmiges Lebensmittel zuerst mit der einen Hälfte seiner Fläche auf den Bratstreifen 16 aufliegt. Durch den kurzen Weg von den Bratstreifen 16 zu den beiden benachbarten Rinnen 11 - quer zu den Rinnen und den Bratstreifen - ist sicher gestellt, dass überflüssiges Fett und andere Flüssigkeit schnell in die Rinne 11 eintritt und dort abfließt.

In Figur 2 ist sehr gut nachvollziehbar, dass diese Ausführungsform eines erfinderischen Brataufsatzes zwei verschiedene Formen der Zubereitung für ein plattenförmiges Lebensmittel ermöglicht:
In einer als eher "klassisch" einzustufenden Variante wird das plattenförmige Lebensmittel auf die Bratstreifen solange aufgelegt, bis es in dem aufliegenden Bereich gut oder sehr gut durchgegart und an der Oberfläche gebräunt ist. Dann bleiben dazwischen nicht so intensiv gegarte Bereiche zurück. Dieses streifenartige Muster wird von manchen als typisch für das Grillen und daher als positives Qualitätsmerkmal eingestuft.

Andere bevorzugen eine ernährungstechnisch optimale Zubereitung, die in Figur 2 ebenfalls sehr gut nachvollziehbar ist: bei Bratstreifen 16 und Rinnen 11 von etwa gleicher Breite kann von dem plattenförmigen Lebensmittel zuerst die eine Hälfte streifenartig vorgegart werden und dann um genau eine Bratstreifenbreite verschoben werden, so dass nun die andere Hälfte gegart wird.

In Figur 2 ist auch gut nachvollziehbar, dass die erfindungsgemäße Bratfläche 1 in der dargestellten Ausführungsform ebenfalls für das Braten von Würsten 4 genutzt werden kann, deren Durchmesser größer als die Breite der Rinnen ist, indem sie in bekannter Weise quer zu den Rinnen aufgelegt werden, so dass sie die Bratfläche 1 nur auf den horizontalen Bratstreifen 16 zwischen den einzelnen Rinnen 11 berühren und dann in bekannter Weise gegrillt werden können.

Figur 2 zeigt auch eine weitere, sehr vorteilhafte Ausführungsform eines erfindungsgemäßen Brataufsatzes: Die Bratfläche 1 ist an ihrer Kante ringsum von etwa vertikalen Abdeckplatten 5 umgeben. Nur im Bereich der Sammelrinne 3 ist keine Abdeckplatte 5 erforderlich, weil die Sammelrinne 3 deren Funktion übernimmt.

Figur 2 macht deutlich, dass dadurch von der Wärmequelle 2 her gesehen eine kastenartige Form entsteht. Darin sammelt sich die von der Wärmequelle 2 aufsteigende Luft und bildet ein Luftpolster mit einer reduzierten Strömungsgeschwindigkeit. Die Erfindung schlägt vor, dieses Luftpolster durch Luftöffnungen 6 abzulassen, so dass weitere, erhitzte Luft von der Wärmequelle 2 her nachströmt und dadurch die Bratfläche 1 effizienter erhitzt.

Am wirkungsvollsten ist dieser Effekt dann, wenn - wie in Figur 2 dargestellt - die Luftöffnungen 6 an zwei einander gegenüberliegenden Kanten angeordnet sind. In Figur 2 sind durch zwei große Doppelpfeile die wesentlichen, damit bewirkten Luftströmungen dargestellt.

Figur 2 zeigt auch eine weitere, vorteilhafte Ausführungsvariante: Die in Figur 2 nicht sichtbare, an der hinteren Kante der Bratfläche 1 angebrachte Abdeckplatte 5 ist höher als die Sammelrinne 3 an der Vorderkante. Dadurch verläuft nicht nur die Bratfläche 1 sondern auch der damit verbundene, mittlere Streifen 12 aller Rinnen 11 geneigt, so dass der Abfluss von Fett und Flüssigkeit beschleunigt wird. Dadurch ist bei der Gestaltung der Streifen 12 der einzelnen Rinnen 11 eine größere Freiheit möglich: die Streifen müssen nicht mehr unbedingt eben sein - wie in Figur 2 noch gezeichnet - sondern können auch ein leicht gewölbtes Profil aufweisen. Trotz des dadurch möglicherweise etwas kleiner werdenden Freiraumes zwischen den zu garenden, zylindrischen Lebensmitteln und den beiden von ihm berührten Streifen ist durch dessen Neigung gegenüber der Horizontalen der Abfluss von Fett und Flüssigkeit noch immer gewährleistet.

### Bezugszeichenliste

- 1: Bratfläche
- 11: Rinnen, in Bratfläche 1
- 12: mittlerer Streifen der Rinne 11
- 13: Wandstreifen der Rinne 11, angrenzend an den mittleren Streifen 12
- 14: Winkel zwischen dem mittleren Streifen 12 und den angren- zenden Wandstreifen 13
- 15: Querwand, schließt Rinne 11 ab
- 16: Bratstreifen, zwischen den Rinnen 11
- 2: Wärmequelle, unterhalb der Bratfläche 1
- 3: Sammelrinne, mit allen Rinnen 11 verbunden
- 4: Wurst, liegt zum Braten in Rinne 11
- 5: vertikale Abdeckplatten am Rand der Bratfläche 1
- 6: Luftöffnung in den Abdeckplatten 5

## Patentansprüche

1. Brataufsatz zum Schnellbraten von mehreren Würsten 4 oder ähnlich geformten Lebensmitteln, bestehend aus einer Bratfläche 1,
- die auf einem Grill oder einer anderen Wärmequelle 2 aufliegt und
- in die mehrere Rinnen 11 eingeformt sind,
**dadurch gekennzeichnet, dass**
- die Rinnen 11 im wesentlichen aus drei etwa ebenen Streifen 12, 13 bestehen, die an ihren Längskanten zu einem etwa trapezförmigen Profil verbunden sind und
- wenigstens eine Wurst 4 mit wenigstens zwei, zueinander beabstandeten, länglichen Bereichen ihrer Außenhaut je einen der drei Streifen 12,13 einer Rinne 11 berührt.

2. Brataufsatz nach Anspruch 1, **dadurch gekennzeichnet, dass** zumindest einige der Rinnen 11 und/oder die Sammelrinne 3
- gegenüber der Horizontalen leicht geneigt verlaufen und/oder
- die Rinnen 11 an ihrem tiefsten Punkt in eine Sammelrinne 3 übergehen und
- die Sammelrinnen 3 in einen Sammelbehälter übergehen.

3. Brataufsatz nach einem der vorhergehenden Ansprüche, **dadurch gekennzeichnet, dass** von den beiden Winkeln 14 zwischen der Oberfläche des mittleren Streifens 12 und den beiden daran angrenzenden Wandstreifen 13
- wenigstens einer größer als 90 Grad ist oder
- beide Winkel 14 die gleiche Größe aufweisen.

4. Brataufsatz nach einem der vorhergehenden Ansprüche, **dadurch gekennzeichnet, dass**
- die beiden Wandstreifen 13 die gleiche Breite aufweisen und/oder
- die Breite des mittleren Streifens 12 etwa ¼ der Breite des breitesten Wandstreifens 13 oder weniger beträgt und/oder
- zwischen den mittleren Streifen 12 und die beiden Wandstreifen 13 je ein gekrümmter Bereich eingefügt ist.

5. Brataufsatz nach einem der vorhergehenden Ansprüche, **dadurch gekennzeichnet, dass**
- die Bratfläche 1 und
- die Sammelrinne 3
gemeinsam eine geschlossene Fläche bilden.

6. Brataufsatz nach einem der vorhergehenden Ansprüche, **dadurch gekennzeichnet, dass** die Bratfläche 1
- Rinnen 11 mit verschiedenen Breiten aufweist und/oder
- wenigstens eine Rinne 11 über ihre Länge hinweg verschiedene Breiten aufweist ,
- deren Breite etwa in der Mitte der Rinne 11 am größten sein kann.

7. Brataufsatz nach einem der vorhergehenden Ansprüche, **dadurch gekennzeichnet, dass**
- die Bratfläche 1 die Wärmequelle 2 vollständig abdeckt und
- möglichst alle Spalte zwischen den Außenkanten der Wärmequelle 2 und der Bratfläche 1 verschlossen sein können.

8. Brataufsatz nach einem der vorhergehenden Ansprüche, **dadurch gekennzeichnet, dass**
- die Bratfläche 1 aus mehrfach abgekantetem Blech besteht und/oder
- alle Rinnen 11 parallel zueinander verlaufen.

9. Brataufsatz nach Anspruch 8, **dadurch gekennzeichnet, dass** zur Anpassung an Wärmequellen 2 mit rechteckiger Begrenzung an die Unterseite der Bratfläche 1 Abdeckplatten anbringbar sind,
- deren obere Kante komplementär zum Profil der Bratfläche 1 geformt ist und/oder
- die parallel zueinander ausgerichtet sind und
- deren Abstand zueinander verstellbar ist und/oder
- die beiden Öffnungen zwischen der Bratfläche 1, den beiden Abdeckplatten und der Wärmequelle 2 durch je zwei Abdeckbleche verschließbar sind, die sich in Abhängigkeit von der Breite der Wärmequelle 2 mehr oder weniger überlappen.

10. Brataufsatz nach einem der vorhergehenden Ansprüche, **dadurch gekennzeichnet, dass** an den äußeren Kanten der Bratfläche 1 umlaufend vertikale Abdeckplatten 5 angebracht sind und in zwei gegenüberliegende Abdeckplatten 5 jeweils wenigstens eine Luftöffnung 6 eingebracht ist.

11. Brataufsatz zum Schnellbraten von mehreren Würsten 4 oder etwa plattenförmigen Lebensmitteln, bestehend aus einer Bratfläche 1,
- die auf einem Grill oder einer anderen Wärmequelle 2 aufliegt und
- in die mehrere Rinnen 11 eingeformt sind,
**dadurch gekennzeichnet, dass**
- die Rinnen 11 im wesentlichen aus drei Streifen 12, 13 bestehen, die an ihren Längskanten zu einem nach oben hin offenen Profil verbunden sind und
- wenigstens eine Wurst 4 mit wenigstens einem länglichen Bereich ihrer Außenhaut wenigstens zwei der drei Streifen 12,13 einer Rinne 11 berühren kann und
- zwischen die Rinnen 11 ebene Bratstreifen 16 eingefügt sind, auf denen wenigstens ein plattenförmiges Lebensmittel aufliegen kann und
- zumindest einige der Rinnen 11
- gegenüber der Horizontalen leicht geneigt verlaufen und
- an ihrem tiefsten Punkt in eine Sammelrinne 3 übergehen.

12. Brataufsatz nach Anspruch 11, **dadurch gekennzeichnet, dass**
- die Streifen etwa eben sind und
- das Profil etwa trapezförmig ist und
- wenigstens eine Wurst 4 mit wenigstens zwei, zueinander beabstandeten, länglichen Bereichen ihrer Außenhaut je einen der drei Streifen 12,13 einer Rinne 11 berühren kann.

13. Brataufsatz nach Anspruch 11 oder 12, **dadurch gekennzeichnet, dass** alle Bratstreifen 16 etwa so breit wie die Rinnen 11 sind und parallel zueinander verlaufen.

14. Brataufsatz nach wenigstens einem der Ansprüche 12 bis 14,
**dadurch gekennzeichnet, dass** am Rand und/oder innerhalb der Bratfläche 1 nach unten weisende, trapezförmige Streifen oder Segmente dieser Streifen senkrecht zur Bratfläche 1 ausgerichtet sind, deren Unterkanten in einer Ebene angeordnet sind, so dass der mittlere Streifen 12 der Rinnen 11 geneigt verläuft.

15. Verfahren zum Schnellbraten eines etwa plattenförmigen Lebensmittels nach Anspruch 13 **dadurch gekennzeichnet, dass** das
Lebensmittel
- während der ersten Hälfte der gesamten Zubereitungszeit erhitzt wird, ohne es zu verschieben und dann
- quer zu den Bratstreifen 16 um die Breite der Bratstreifen 16 verschoben
wird und dann
- während der zweiten Hälfte der gesamten Zubereitungszeit weiter erhitzt wird, ohne es zu verschieben.
